# EUROPEAN PATENT SPECIFICATION

(11) **EP 3 141 628 B1**
(45) Date of publication and mention of the grant of the patent: **17.10.2018**
(21) Application number: 15789908.9
(22) Date of filing: 28.04.2015
(51) Int. Cl.: C23C 4/06, C23C 4/10, F16J 9/26

(54) **SLIDING MEMBER AND PISTON RING**
GLEITELEMENT UND KOLBENRING
ELEMENT COULISSANT ET SEGMENT DE PISTON

(30) Priority: 08.05.2014 JP 2014096857
(43) Date of publication of application: 15.03.2017
(73) Proprietor: Kabushiki Kaisha Riken, Tokyo 102-8202 (JP)
(72) Inventor: HIROTA, Kazuhiko, Kashiwazaki-shi Niigata 945-8555 (JP); KAMURA, Shuichi, Kashiwazaki-shi Niigata 945-8555 (JP)
(74) Representative: Hooiveld, Arjen Jan Winfried
(86) International application number: PCT/JP2015/062857
(87) International publication number: WO 2015/170648

(56) References cited:
- EP-A1- 1 564 309
- JP-A- H04 175 577
- JP-A- S63 190 154
- US-A1- 2005 260 436
- HWANG J-H ET AL: "TRIBOLOGICAL BEHAVIOR OF PLASMA SPRAY COATINGS FOR MARINE DIESEL ENGINE PISTON RING AND CYLINDER LINER", JOURNAL OF MATERIALS ENGINEERING AND PERFORMANCE, ASM INTERNATIONAL, MATERIALS PARK, OH, US, vol. 15, no. 3, 1 June 2006 (2006-06-01), pages 328-335, XP001243724, ISSN: 1059-9495, DOI: 10.1361/105994906X108611

## Description

### Technical Field

The present invention relates to a sliding member and a piston ring.

### Background Art

In recent years, along with the achievement of high performance including the achievement of high outputs of engines, the use environment of piston rings for engines increasingly become severe and piston rings having more excellent abrasion resistance and seizure resistance are demanded (see the following Patent Literatures 1 to 4). Particularly outer peripheral surfaces of piston rings sliding against cylinder liners are required to have high abrasion resistance and seizure resistance, and the like. In order to meet these requirements, coatings have been formed on the outer peripheral sliding surfaces of piston rings by a thermal spray method to thereby impart high abrasion resistance and seizure resistance to the piston rings. Here, "seizure" is a phenomenon that an outer peripheral surface (sliding surface) of a piston ring joins with a cylinder liner due to heat generation along with its sliding against the cylinder liner. The "seizure resistance" refers to a property of hardly causing seizure.

For example, as means of enhancing the abrasion resistance of a thermal spray coating, there is means of increasing a ceramic component as a hard particle contained in the thermal spray coating.

United States application publication no. US 2006/0040125 describes a piston ring with a thermal spray coating comprising chromium carbide particles and a matrix metal composed of a Ni-Cr alloy or a Ni-Cr alloy and Ni on at least an outer surface such that said piston ring has decent wear resistance.

United States application publication no. US 2005/0260436 describes a wear resistant coating for protecting surfaces undergoing sliding contact. Said coating contains nickel-chromium alloy, chromium carbide, and molybdenum.

In the Journal of Materials Engineering and Performance (vol. 15(3)) of June 2006, on pages 328 to 335, with title 'Tribological Behavior of Plasma Spray Coatings for Marine Diesel Engine Piston Ring and Cylinder Liner', Hwang et al. describe a plasma spray coating for protecting marine diesel engine components. Several coatings have been studied, such as Cr₃C₂-NiCr-Mo.

### Citation List

### Patent Literature

Patent Literature 1: Japanese Unexamined Patent Publication Application No. 2007-314839
Patent Literature 2: Japanese Unexamined Patent Publication Application No. 2005-155711
Patent Literature 3: Japanese Unexamined Patent Publication Application No. 2012-046821
Patent Literature 4: Japanese Unexamined Patent Publication Application No. H3-172681

### Summary of Invention

### Technical Problem

When a ceramic component in a thermal spray coating increases, however, the abrasion loss of the inner surface of the engine liner which is sliding against the outer peripheral surface of the piston ring ends in increasing. Hereinafter, a member sliding against an outer peripheral surface of a piston ring, like the inner surface of the engine liner, is described as an "opposite member."

Thermal spray coatings, since being formed by striking particles in a semi-molten state against a base material, have such a texture that a plurality of particles having different compositions are crushed and overlap. Hence, when a thermal spray coating is slid, both a soft metal component and a hard ceramic component emerge on the sliding surface of the thermal spray coating. In the case where the hard component and the soft component are slid, since the soft component is easily abraded, the sliding surface of the thermal spray coating is liable to become rougher as compared with sliding surfaces of homogeneous materials. Further in the case where the thermal spray conditions are not adequate, part of the texture easily comes off the sliding surface, and the sliding surface becomes rough and abrasive wear is generated by the coming-off particles in some cases.

The present invention has an object to provide a sliding member and a piston ring having excellent abrasion resistance and being capable of suppressing abrasion of opposite members.

### Solution to Problem

A sliding member according to one aspect of the present invention comprises a base material and a thermal spray coating formed on a sliding surface of the base material, wherein the thermal spray coating includes a molybdenum phase, a chromium carbide phase and a nickel chromium alloy phase; the molybdenum phase, the chromium carbide phase and the nickel chromium alloy phase are deposited on the sliding surface of the base material; T_{CrC}/T_{Mo} is 0.46 to 1.00 where the average value of the thicknesses of the chromium carbide phases in the direction perpendicular to the sliding surface of the base material is T_{CrC}, and the average value of the thicknesses of the molybdenum phases in the direction perpendicular to the sliding surface of the base material is T_{Mo}; and wherein the T_{Mo} is 1.4 to 4.2 µm; and the T_{CrC} is 1.1 to 2.2 µm.

In a sliding member according to one aspect of the present invention, pores are formed in a thermal spray coating; molybdenum phases, chromium carbide phases, nickel chromium alloy phases and the pores overlap on a sliding surface; and the total of numbers of the molybdenum phases, the chromium carbide phases, the nickel chromium alloy phases and the pores overlapping on the sliding surface may be 48/(100 µm) to 71/(100 µm) per unit thickness of the thermal spray coating in the direction perpendicular to the sliding surface.

In a sliding member according to one aspect of the present invention, the content of a molybdenum atom in a thermal spray coating may be 37 to 51% by mass; the content of a chromium atom in the thermal spray coating may be 19 to 32% by mass; the content of a nickel atom in the thermal spray coating may be 6 to 13% by mass; and the content of a carbon atom in the thermal spray coating may be 10 to 14% by mass.

In a sliding member according to one aspect of the present invention, the average hardness of a thermal spray coating may be 400 to 900 HV0.1.

A piston ring according to one aspect of the present invention comprises the sliding member.

### Advantageous Effects of Invention

According to the present invention, a sliding member and a piston ring having excellent abrasion resistance and being capable of suppressing abrasion of opposite members can be provided.

### Brief Description of Drawings

[Figure 1] (a) in Figure 1 (that is, Figure 1a) is a perspective view of a sliding member (piston ring) according to one embodiment of the present invention; and (b) in Figure 1 (that is, Figure 1b) is a cross-sectional view in the b-b direction of the sliding member of Figure 1a. [Figure 2] Figure 2 is a view illustrating an internal structure of a thermal spray coating in a sliding member according to one embodiment of the present invention, and is a cross-sectional schematic view of the thermal spray coating in the direction perpendicular to a sliding surface of the sliding member.
[Figure 3] Figure 3 is a side view of an abrasion loss measuring apparatus.
[Figure 4] Figure 4 is a reflection electron image of a part of the cross-section (cross-section perpendicular to the sliding surface of the base material) of the thermal spray coating of the sliding member in Example 1 according to the present invention.
[Figure 5] Figure 5 is a reflection electron image of another part of the cross-section (cross-section perpendicular to the sliding surface of the base material) of the thermal spray coating of the sliding member in Example 1.
[Figure 6] Figure 6 is a reflection electron image of a part of the cross-section (cross-section perpendicular to the sliding surface of the base material) of the thermal spray coating of the sliding member in Example 2 according to the present invention.
[Figure 7] Figure 7 is a reflection electron image of another part of the cross-section (cross-section perpendicular to the sliding surface of the base material) of the thermal spray coating of the sliding member in Example 2 according to the present invention.
[Figure 8] Figure 8 is a reflection electron image of a part of the cross-section (cross-section perpendicular to the sliding surface of the base material) of the thermal spray coating of the sliding member in Example 3 of the present invention.
[Figure 9] Figure 9 is a reflection electron image of another part of the cross-section (cross-section perpendicular to the sliding surface of the base material) of the thermal spray coating of the sliding member in Example 3 according to the present invention.
[Figure 10] Figure 10 is a reflection electron image of a part of the cross-section (cross-section perpendicular to the sliding surface of the base material) of the thermal spray coating of the sliding member in Comparative Example 1.
[Figure 11] Figure 11 is a reflection electron image of another part of the cross-section (cross-section perpendicular to the sliding surface of the base material) of the thermal spray coating of the sliding member in Comparative Example 1.
[Figure 12] Figure 12 is a reflection electron image of a part of the cross-section (cross-section perpendicular to the sliding surface of the base material) of the thermal spray coating of the sliding member in Comparative Example 2.
[Figure 13] Figure 13 is a reflection electron image of another part of the cross-section (cross-section perpendicular to the sliding surface of the base material) of the thermal spray coating of the sliding member in Comparative Example 2.
[Figure 14] Figure 14 is a reflection electron image of a part of the cross-section (cross-section perpendicular to the sliding surface of the base material) of the thermal spray coating of the sliding member in Comparative Example 3.
[Figure 15] Figure 15 is a reflection electron image of another part of the cross-section (cross-section perpendicular to the sliding surface of the base material) of the thermal spray coating of the sliding member in Comparative Example 3.
[Figure 16] Figure 16 is a reflection electron image of a part of the cross-section (cross-section perpendicular to the sliding surface of the base material) of the thermal spray coating of the sliding member in Comparative Example 4.
[Figure 17] Figure 17 is a reflection electron image of another part of the cross-section (cross-section perpendicular to the sliding surface of the base material) of the thermal spray coating of the sliding member in Comparative Example 4.

### Description of Embodiments

Hereinafter, by reference to the drawings, preferred embodiments of the present invention will be described in detail. However, the present invention is not limited to the following embodiments.

### [Sliding member]

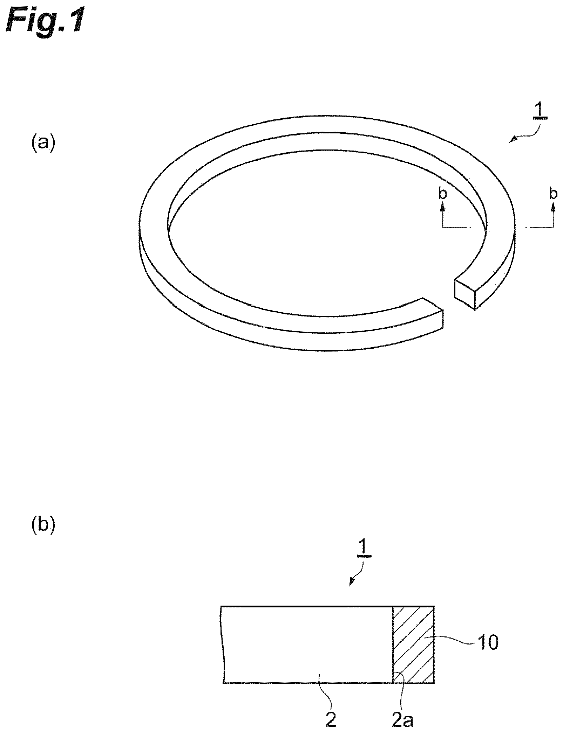

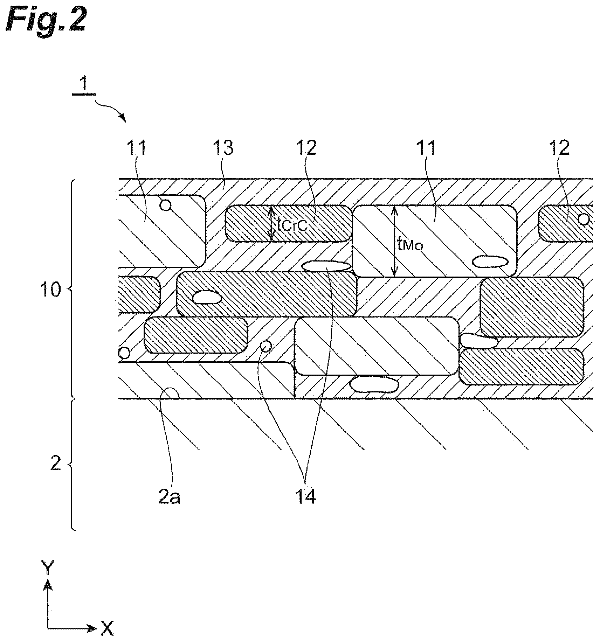

A sliding member according to the present embodiment may constitute, for example, parts or the wholes of piston rings, cylinders, vanes, lifters and the like. Hereinafter, the case where the sliding member 1 is a piston ring will be described. As shown in Figures 1 and 2, a piston ring 1 according to the present embodiment has, for example, an annular base material 2, and a thermal spray coating 10 formed on a sliding surface 2a positioned on the outer periphery of the base material 2.

The base material 2 consists of, for example, a cast iron material, a steel material or the like. The shape of the base material 2 is suitably selected depending on the applications of the sliding member, and is not especially limited. In the case where the sliding member 1 is a piston ring, the outer diameter of the base material 2 may be, for example, 200 mm to 980 mm. The inner diameter of the base material 2 may be, for example, 190 mm to 920 mm. The thickness of the base material 2 may be, for example, about 5 mm to 25 mm. The outer peripheral surface of the base material 2, in the case where the piston ring 1 is inserted into a cylinder of an engine, is a surface sliding against a liner which is an opposite member.

Before the thermal spray coating 10 is formed on the outer peripheral surface of the base material 2, irregularity having a roughness of about 1 to 20 µm may previously be formed on the outer peripheral surface of the base material 2 by sand blast or the like. Thereby, when molten particles collide against projected portions or depressed portions of the base material 2 in the thermal spray method, stresses act on the particles along with the solidification and shrinkage of the molten particles, and the thermal spray coating 10 is easily adhered firmly to the base material 2 due to the anchoring effect caused by the stresses.

As shown in Figure 2, the thermal spray coating 10 includes a molybdenum phase 11, a chromium carbide phase 12 and a nickel chromium alloy phase 13. The thermal spray coating 10 may include a plurality of molybdenum phases 11, a plurality of chromium carbide phases 12 and a plurality of nickel chromium alloy phases 13. The thermal spray coating 10 may consist of molybdenum phases 11, chromium carbide phases 12 and nickel chromium alloy phases 13. The molybdenum phases 11 contribute to the seizure resistance of the thermal spray coating 10. The chromium carbide phases 12 contribute to the abrasion resistance of the thermal spray coating 10. At least a part of the nickel chromium alloy phases 13 interposes between a molybdenum phase 11 and a chromium carbide phase 12 and has a function of joining both the phases. The molybdenum phase 11, the chromium carbide phase 12 and the nickel chromium alloy phase 13 are deposited on the sliding surface 2a of the base material 2. The molybdenum phases 11, the chromium carbide phases 12 and the nickel chromium alloy phases 13 may be layers extending in the direction parallel with the sliding surface 2a. That is, the molybdenum phases 11, the chromium carbide phases 12 and the nickel chromium alloy phases 13 may be molybdenum layers, chromium carbide layers and nickel chromium alloy layers, respectively.

T_{CrC}/T_{Mo} is 0.46 to 1.00 where the thickness of the chromium carbide phase 12 in the direction Y perpendicular to the sliding surface 2a of the base material 2 is t_{CrC}, and the average value of the t_{CrC} is T_{CrC}; and the thickness of the molybdenum phase 11 in the direction Y is t_{Mo}, and the average value of the t_{Mo} is T_{Mo}.

That the T_{CrC}/T_{Mo} is 0.46 to 1.00 means that the difference between the average thickness T_{CrC} of the chromium carbide phases 12 and the average thickness T_{Mo} of the molybdenum phases 11 is small.

The chromium carbide phases 12 are harder and more hardly abraded than the molybdenum phases 11. In other words, the molybdenum phases 11 are softer and more easily abraded than the chromium carbide phases 12. Therefore, in the case where the T_{CrC}/T_{Mo} is out of the range of 0.46 to 1.00, the soft molybdenum phases 11 are liable to be abraded on the sliding surface of the thermal spray coating 10; and the hard chromium carbide phases 12 are liable to expose on and remain on the sliding surface of the thermal spray coating 10. That is, in the case where the difference between T_{CrC} and T_{Mo} is large, the sliding surface of the thermal spray coating 10 is liable to be abraded and the sliding surface is liable to become rough. In the case where the hard chromium carbide phases 12 expose on the sliding surface of the thermal spray coating 10, an opposite member is liable to be abraded due to sliding against the chromium carbide phases 12. Further in the case where the chromium carbide phases 12 expose on the sliding surface of the thermal spray coating 10, the chromium carbide phases 12 are liable to come off the sliding surface of the thermal spray coating 10, and the coming-off chromium carbide phases 12 cause abrasive wear. By contrast, the above phenomenon which occurs in the case where the difference between T_{CrC} and T_{Mo} is large is suppressed. That is, in the present embodiment, since the T_{CrC}/T_{Mo} is 0.46 to 1.00 and the difference between T_{CrC} and T_{Mo} is small, the sliding surface of the thermal spray coating 10 is uniform; and the abrasion and roughening of the sliding surface of the thermal spray coating 10 along with sliding are suppressed, and the abrasion of an opposite member is also suppressed. For the same reason, the T_{CrC}/T_{Mo} may be 0.50 to 1.00, 0.51 to 1.00, 0.60 to 1.00, 0.65 to 1.00, 0.50 to 0.80, 0.51 to 0.80, 0.60 to 0.80, 0.65 to 0.80, 0.50 to 0.76, 0.51 to 0.76, 0.60 to 0.76 or 0.65 to 0.76.

The average thickness T_{Mo} of the molybdenum phases 11 is 1.4 to 4.2 µm or may be 2.0 to 4.0 µm. In the case where the average thickness T_{Mo} of the molybdenum phases 11 is 4.2 µm or smaller, the sliding surface is likely to become smooth. For the same reason, the T_{Mo} may be 2.4 to 3.0 µm.

The average thickness T_{CrC} of the chromium carbide phases 12 is 1.1 to 2.2 µm. In the case where the T_{CrC} is 1.0 µm or larger, the abrasion resistance that the chromium carbide phases have is likely to be sufficiently exhibited, and that the abrasion loss of the thermal spray coating is likely to be reduced in the abrasion loss of the thermal spray coating. In the case where the average thickness T_{CrC} of the chromium carbide phases 12 is 2.2 µm or smaller, it becomes difficult for the chromium carbide phases to protrude from the sliding surface at the time of sliding, and the sliding surface after the sliding becomes smooth, thereby the abrasion losses of both of the thermal spray coating and an opposite member are likely to decrease. For the same reason, the T_{CrC} may be 1.4 to 1.9 µm.

The average thickness T_{NiCr} of the nickel chromium alloy phases 13 may be 0.5 to 1.0 µm. The average thickness T_{NiCr} of the nickel chromium alloy phases 13 may be 0.8 to 0.9 µm.

A plurality of pores 14 may be formed in the thermal spray coating 10. Pores 14 may be formed in the molybdenum phases 11 of the thermal spray coating 10. Pores 14 may be formed in the chromium carbide phases 12 of the thermal spray coating 10. Pores 14 may be formed in the nickel chromium alloy phases 13 of the thermal spray coating 10. Pores 14 may be formed between two phases or three phases out of the molybdenum phases 11, the chromium carbide phases 12 and the nickel chromium alloy phases 13. The width D of the pores 14 may be 0.4 to 0.8 µm. The width D of the pores 14 refers to an average value of widths (inner diameters) of the pores 14 in the direction Y perpendicular to the sliding surface 2a of the base material 2. The width D of the pores 14 may be 0.5 to 0.6 µm.

The molybdenum phases 11, the chromium carbide phases 12, the nickel chromium alloy phases 13 and the pores 14 may overlap on the sliding surface 2a. That is, the molybdenum phases 11, the chromium carbide phases 12, the nickel chromium alloy phases 13 and the pores 14 may overlap along the direction Y perpendicular to the sliding surface 2a. (N_{Mo} + N_{CrC} + N_{NiCr} + N_{P}) may be 48/(100 µm) to 71/(100 µm) where the average number of the molybdenum phases 11 overlapping on the sliding surface 2a is N_{Mo} (unit: 1/100 µm) per unit thickness of the thermal spray coating 10; the average number of the chromium carbide phases 12 overlapping on the sliding surface 2a is N_{CrC} (unit: 1/100 µm) per unit thickness of the thermal spray coating 10; the average number of the nickel chromium alloy phases 13 overlapping on the sliding surface 2a is N_{Nicr} (unit: 1/100 µm) per unit thickness of the thermal spray coating 10; and the average number of the pores 14 overlapping on the sliding surface 2a is N_{P} per unit thickness of the thermal spray coating 10. In the case where the (N_{Mo} + N_{CrC} + N_{NiCr} + N_{P}) is in the above range, it is likely that the each phases constituting the texture of the thermal spray coating 10 are fine; the uneven distribution of the each phases in the thermal spray coating 10 is suppressed; and the thermal spray coating 10 is uniformly worn. Hence, it is likely that the sliding surface of the thermal spray coating 10 at the time of sliding easily becomes smooth; the surface roughness of the sliding surface of the thermal spray coating 10 is easily reduced; and the abrasion of an opposite member is easily suppressed. For the same reason, the (N_{Mo} + N_{CrC} + N_{NiCr} + N_{P}) may be 51.6/(100 µm) to 64.6/(100 µm).

The average number N_{Mo} of the molybdenum phases 11 may be, for example, 16.1/(100 µm) to 19.9/(100 µm) or 17.2/(100 µm) to 18.7/(100 µm).

The average number N_{CrC} of the chromium carbide phases 12 may be, for example, 15.1/(100 µm) to 21.6/(100 µm) or 16.0/(100 µm) to 21.2/(100 µm).

The average number N_{Nicr} of the nickel chromium alloy phases 13 may be, for example, 11.6/(100 µm) to 29.9/(100 µm) or 15.4/(100 µm) to 24.4/(100 µm).

The average number N_{P} of the pores 14 may be, for example, 0.3/(100 µm) to 7.9/(100 µm) or 0.6/(100 µm) to 3.6/(100 µm).

The content of a molybdenum atom in the thermal spray coating 10 may be 37 to 51% by mass or 40.64 to 48.68% by mass.

The content of a chromium atom in the thermal spray coating 10 may be 19 to 32% by mass or 21.90 to 29.16% by mass.

The content of a nickel atom in the thermal spray coating 10 may be 6 to 13% by mass or 7.98 to 11.89% by mass.

The content of a carbon atom in the thermal spray coating 10 may be 10 to 14% by mass or 11 to 14% by mass.

In the case where the contents of a molybdenum atom, a chromium atom, a nickel atom and a carbon atom are in the above ranges, the effect according to the present invention is likely to be attained.

The thickness of the thermal spray coating 10 may be 50 to 600 µm or 200 to 450 µm. In the case where the thickness of the thermal spray coating 10 is 50 µm or larger, even after the surface thereof is processed in order to control the roughness of the thermal spray coating 10, a sufficient thickness thereof can be left and the durability of the thermal spray coating 10 is likely to be easily maintained. In the case where the thickness of the thermal spray coating 10 is 600 µm or smaller, the delamination of the thermal spray coating 10 from the base material 2 is likely to be easily suppressed.

The Vickers hardness of the thermal spray coating 10 may be 400 to 900 HV0.1, 450 to 850 HV0.1, or 500 to 800 HV0.1. In the case where the Vickers hardness of the thermal spray coating 10 is 400 HV0.1 or higher, the abrasion loss of the thermal spray coating is likely to decrease. In the case where the Vickers hardness of the thermal spray coating 10 is 900 HV0.1 or lower, the abrasion loss of an opposite member is likely to decrease.

### [Manufacturing method of the sliding member]

The sliding member 1 is manufactured by thermally spraying a powder composition (particles) on the sliding surface 2a of the base material 2 to thereby form the thermal spray coating 10 on the sliding surface 2a of the base material 2. The powder composition contains, for example, molybdenum particles, chromium carbide particles, and nickel chromium alloy particles. The powder composition may consist only of molybdenum particles, chromium carbide particles, and nickel chromium alloy particles.

The content of the molybdenum particles in the powder composition may be 40 to 60% by mass or 45 to 55% by mass with respect to the total mass of the powder composition. By making the powder composition to contain the molybdenum particles, the thermal spray coating 10 excellent in the abrasion resistance and the seizure resistance and excellent in the adhesiveness with the base material 2 is easily obtained. In the case where the content of the molybdenum particles in the powder composition is 40% by mass or higher, the seizure resistance and the adhesiveness are likely to improve. Further in the case where the content of the molybdenum particles in the powder composition is 60% by mass or lower, the mixing proportion of the chromium carbide particles and the nickel chromium alloy particles is easily secured by regulating the contents of the chromium carbide particles and the nickel chromium alloy particles.

The median diameter of the molybdenum particles may be 15 to 40 µm or 25 to 35 µm. In the case where the median diameter of the molybdenum particles is 15 µm or larger, it is likely to become easy for molybdenum to be entangled with other metal components in the thermal spray coating 10. Further it is likely that excessive generation of fumes at the time of thermal spraying can be suppressed and the adhesive force of the thermal spray coating 10 with the base material 2 easily improves. Further, it is likely that the flowability of the powder composition improves and the thermal spray coating 10 is easily formed. On the other hand, in the case where the median diameter of the molybdenum particles is 40 µm or smaller, it is likely that a finer texture is formed in the thermal spray coating 10 and the abrasion of an opposite member is easily reduced. Further, it is likely that the molybdenum particles easily melt and the porosity in the thermal spray coating 10 decreases. Here, the median diameter of particles indicates a diameter at which when a particle group having a particle diameter distribution is divided into two groups at a certain boundary in the particle diameters, the number of particles in the group of larger diameters and the number of particles in the group of smaller diameters become equal.

The molybdenum particles may be granulated sintered particles. The granulated sintered particles of molybdenum are obtained by granulating a molybdenum powder of small-diameter particles and thereafter heating the granulated powder. The particle diameter of the molybdenum powder to be used for granulation may be, for example, 1 to 3 µm.

The content of the chromium carbide particles in the powder composition may be 20 to 40% by mass or 30 to 40% by mass with respect to the total mass of the powder composition. By making the powder composition to contain the chromium carbide particles, the abrasion resistance of the thermal spray coating 10 in an engine or the like can be improved. In the case where the content of the chromium carbide particles in the powder composition is 20% by mass or higher, the abrasion resistance of the thermal spray coating 10 is likely to be easily improved. Further in the case where the content of the chromium carbide particles in the powder composition is 40% by mass or lower, it is likely that the particles easily bond with one another in the thermal spray coating 10 and the coming-off of the chromium carbide phases from the surface of the thermal spray coating 10 is easily suppressed. When chromium carbide comes off the surface of the thermal spray coating 10, the sliding member 1 and an opposite member slide against each other with the coming-off chromium carbide being present at the interface between the thermal spray coating 10 and the opposite member, so that the abrasion loss of the coating and the abrasion loss of the opposite member are likely to increase together.

The median diameter of the chromium carbide particles may be 5 to 25 µm, 9 to 24 µm, or 10 to 20 µm. In the case where the median diameter of the chromium carbide particles is 5 µm or larger, as compared with the case where the chromium carbide particles are too small, it becomes more easy for the chromium carbide to be entangled with other metal components and it becomes difficult to come off the sliding surface of the thermal spray coating 10. Further in the case where the median diameter of the chromium carbide particles is 25 µm or smaller, it becomes difficult for the chromium carbide phases to protrude from the sliding surface of the thermal spray coating 10 and the sliding surface becomes smooth, so that it is likely to be difficult for the chromium carbide phases themselves to come off the sliding surface. Further also such a phenomenon hardly occurs that by the chromium carbide phases protruding on the sliding surface of the thermal spray coating 10, the sliding surface of an opposite member is abraded. Further in the case where the median diameter of the chromium carbide particles is 25 µm or smaller, as compared with the case where the chromium carbide particles is too large, the difference in hardness in the texture of the thermal spray coating 10 more decreases. Consequently, locally hard portions (portions where chromium carbide is present unevenly) in the sliding surface of the thermal spray coating 10 become small, and such a phenomenon hardly occurs that fine irregularity is formed on the sliding surface of the opposite member due to the chromium carbide. Therefore, in the case where the median diameter of the chromium carbide particles is in the above range, it is likely that the abrasion resistance of the thermal spray coating 10 is easily improved and the abrasion of the sliding surface of the opposite member is easily suppressed.

M_{CrC}/M_{Mo} may be 0.33 to 1.00 where the content of the molybdenum particles in the powder composition is M_{Mo}% by mass, and the content of the chromium carbide particles in the powder composition is M_{CrC}% by mass. In the case where the M_{CrC}/M_{Mo} is 0.33 to 1.00, the T_{CrC}/T_{Mo} is easily controlled in the range of 0.46 to 1.00. For the same reason, the M_{CrC/}M_{Mo} may be 0.54 to 0.89.

The content of the nickel chromium alloy particles in the powder composition may be 10 to 25% by mass or 10 to 20% by mass with respect to the total mass of the powder composition. By making the powder composition to contain the nickel chromium alloy particles, coming-off of the chromium carbide from the thermal spray coating 10 by sliding and the like can be suppressed. In the case where the content of the nickel chromium alloy particles in the powder composition is 10% by mass or higher, coming-off of components (particularly chromium carbide) constituting the thermal spray coating 10 from the sliding surface is likely to be easily suppressed. Further in the case where the content of the nickel chromium alloy particles in the powder composition is 25% by mass or lower, the seizure resistance is likely to be easily improved.

The median diameter of the nickel chromium alloy particles may be 10 to 35 µm or 15 to 30 µm. In the case where the median diameter of the nickel chromium alloy particles is 10 µm or larger, coming-off of components (particularly chromium carbide) constituting the thermal spray coating 10 from the sliding surface is likely to be easily suppressed. Further in the case where the median diameter of the nickel chromium alloy particles is 35 µm or smaller, it is likely that the texture in the thermal spray coating 10 becomes compact; coming-off of components constituting the thermal spray coating 10 is easily suppressed; and the abrasion of an opposite member is easily suppressed. Further, it is likely that the nickel chromium alloy in the thermal spray coating 10 is finely dispersed on the sliding surface; and the abrasion of an opposite member is easily reduced.

The powder composition may contain other components other than the above. The other components may be, for example, a nickel alloy other than the nickel chromium alloy, a cobalt alloy, copper or a copper alloy. The nickel alloy may be, for example, a nickel-based self-fluxing alloy. The content of the above other components in the powder composition is allowed to be about 1 to 10% by mass based on the total amount of the powder composition. The median diameters of the other components are not especially limited. Here, the powder composition contains components other than the above as unavoidable impurities in some cases. Any content of the impurities is allowed as long as being low in degrees not inhibiting the effect of the present invention.

The powder composition is heated in a thermal spray apparatus, and is jetted at a high velocity toward the sliding surface 2a of the base material 2. A method of thermally spraying the powder composition onto the sliding surface 2a of the base material 2 may be a gas flame spray method, a plasma spray method, a high-velocity flame spray method (HVOF) or the like. Among these methods, a plasma spray method is preferable.

In the plasma spray method, by applying a high voltage between a positive electrode and a negative electrode of the thermal spray apparatus, a gas between the positive electrode and the negative electrode is turned into plasma. The gas turned into plasma is heated, and is further expanded, and it is therefore jetted out at a high temperature and a high velocity from the thermal spray apparatus to thereby make a plasma jet stream (plasma plume). The powder composition fed to the thermal spray apparatus is heated and accelerated in the plasma jet stream, and jetted toward the base material 2. The particles heated and accelerated are, since part of the particles is melted, flattened when colliding against the base material 2, and are deposited in layers on the sliding surface 2a of the base material 2. Then, the particles deposited in layers are quickly cooled on the base material 2 to thereby form the thermal spray coating 10.

According to the plasma spray method, the particles in the powder composition can be heated at a higher temperature than other thermal spray methods, and melting of each particle in the powder composition is likely to be promoted. Hence, on a cross-section XY (cross-section parallel to the direction of the thickness of the coating) perpendicular to the sliding surface 2a of the base material 2 of the thermal spray coating 10 fabricated by the plasma spray method, it is likely that layered molybdenum phases 11, layered chromium carbide phases 12 and layered nickel chromium alloy phases 13 are deposited; each phases are folded and overlap one another; and an entangled texture is formed. Then, the formation of the above texture on a cross-section of the thermal spray coating 10 is likely to make the chromium carbide phases to be easily held in the thermal spray coating 10 also after sliding and to easily make the surface of the thermal spray coating 10 after sliding to become smooth. Therefore, the thermal spray coating 10 obtained by the above plasma spray is excellent in the abrasion resistance, and suppresses the abrasion of an opposite member.

In the plasma spray method, the average velocity of particles (thermal spray particles flying in plasma plume) made to collide against the base material 2 may be, for example, 210 m/sec or higher, or 215 m/sec or higher. The average velocity of thermal spray particles may be, for example, 230 m/sec or lower, or 226 m/sec or lower. In the plasma spray method, the average temperature of thermal spray particles may be, for example, 3000°C or higher, or 3025°C or higher. In the plasma spray method, the average temperature of thermal spray particles may be, for example, 3250°C or lower, or 3228°C or lower. In the case where the average velocity of particles made to collide against the base material 2 is 210 m/sec or higher, and the average temperature of the particles is 3000°C or higher, the molybdenum particles easily deform and thin molybdenum phases are easily formed; and the T_{CrC}/T_{Mo} is easily controlled in the range of 0.46 to 1.00.

The conditions of the plasma spray are set so that the average velocity and the average temperature of the above thermal spray particles are in the above ranges. In the case of manufacturing the thermal spray coating 10 having a T_{CrC}/T_{Mo} in the range of 0.46 to 1.00, the electric current value (plasma gas electric current) of the plasma spray may be, for example, 450 to 550 A; and the electric power value may be, for example, 45 to 75 kW.

The gas fed between the positive electrode and the negative electrode of the plasma spray apparatus may be, for example, nitrogen, argon, hydrogen, or helium. The above gas (plasma working gas) may be used singly or in a combination of two. The plasma working gas may be a mixed gas of nitrogen and argon.

The feed amount of the plasma working gas may be 80 to 160 NL/min, or 100 to 130 NL/min. Further in the case where the plasma working gas is a mixed gas of nitrogen and argon, the feed amount of nitrogen in the mixed gas may be 1 to 20 NL/min. The feed amount of argon in the mixed gas may be 79 to 140 NL/min. In the case where the feed amount of the plasma working gas is equal to or larger than the above lower limit value, since a sufficient velocity can be imparted to particles at the time of spraying, it is likely that the thermal spray coating 10 becomes compact and coming-off of the each phase from the thermal spray coating 10 is easily suppressed. In the case where the feed amount of the plasma working gas is equal to or smaller than the above upper limit value, it is likely that the velocity of particles at the time of spraying does not become too high and the thermal spray coating 10 is likely to be easily suppressed in becoming excessively compact. Hence, it is likely that the internal stress in the thermal spray coating 10 becomes low and cracks are hardly generated in the thermal spray coating 10. Further, it is likely that the particles in the powder composition are enabled to be sufficiently melted; lumps (spitting) of particles whose melting is insufficient are suppressed in being contained in the thermal spray coating 10; and the surface of the thermal spray coating 10 is easily suppressed in becoming rough.

### Examples

Hereinafter, the present invention will be described specifically by way of Examples, but the scope of the present invention is not limited thereto.

### (Example 1)

### [Fabrication of a sliding member 1]

A plate material of structural rolled steel (SS400) was cut out into a square pillar shape of 5 mm long, 3.5 mm wide and 8 mm thick to thereby obtain a test base material. By the following procedure, a thermal spray coating was formed on a sliding surface (a surface of 5 mm long × 3.5 mm wide) of the base material.

50 parts by mass of molybdenum particles, 15 parts by mass of nickel chromium alloy particles and 35 parts by mass of chromium carbide particles were mixed to thereby obtain a powder composition A. As the molybdenum particles, particles (trade name: SG-12S), manufactured by Powlex Co., Ltd., obtained by granulating and sintering a molybdenum powder were used. The particle diameter of the molybdenum powder (primary particles) before the granulation was 1 to 3 µm, and the median diameter of the molybdenum particles (secondary particles) after the granulation was 31 µm. As the nickel chromium alloy particles, particles (trade name: Metco 43VF-NS), manufactured by Sulzer Metco Inc., were used. The median diameter of the nickel chromium alloy particles was 22 µm. As the chromium carbide particles, particles (trade name: Metco 70F), manufactured by Sulzer Metco Inc., were used. The median diameter of the chromium carbide particles was 13 µm.

The powder composition A was thermal spray on the sliding surface of the test base material by a plasma spray method to thereby fabricate a sliding member of Example 1. The plasma spray method was carried out by using a plasma spray apparatus "TriplexPro," manufactured by Sulzer Metco Inc. The plasma spray was carried out under the following conditions. The average velocity of thermal spray particles was regulated at 218 m/sec. The average temperature of the thermal spray particles was regulated at 3228°C. The average velocity and the average temperature of the thermal spray particles were measured by using a thermal spray condition analyzer "SprayWatch"(R), manufactured by Oseir Ltd. On the central part of the sliding surface of the base material 2 against which the thermal spray particles were made to collide, the average velocity and the average temperature of the thermal spray particles were measured.
Electric current: 450 A
Electric power: 54 kW
Carrier gas (plasma working gas): a mixed gas of Ar and N₂
Flow volume (feed amount) of Ar gas: 100 NL/min
Flow volume (feed amount) of N₂ gas: 2.2 NL/min

### [Analysis of the structure and the composition of the sliding member]

As a result of measurements using a scanning electron microscope (SEM), it was confirmed that a thermal spray coating having a thickness of about 438 µm was formed on the sliding surface of the base material after the thermal spraying.

The thermal spray coating of the sliding member of Example 1 was cut in the direction perpendicular to the sliding surface of the base material. The thermal spray coating in this cross-section 1 thereof was analyzed by an energy dispersive X-ray spectrometer (SEM-EDX) attached to the SEM. As a result of the analysis, the thermal spray coating was confirmed to include a plurality of molybdenum phases, a plurality of chromium carbide phases and a plurality of nickel chromium alloy phases. Further as a result of the observation by the SEM, it was confirmed that a plurality of pores were formed in the thermal spray coating.

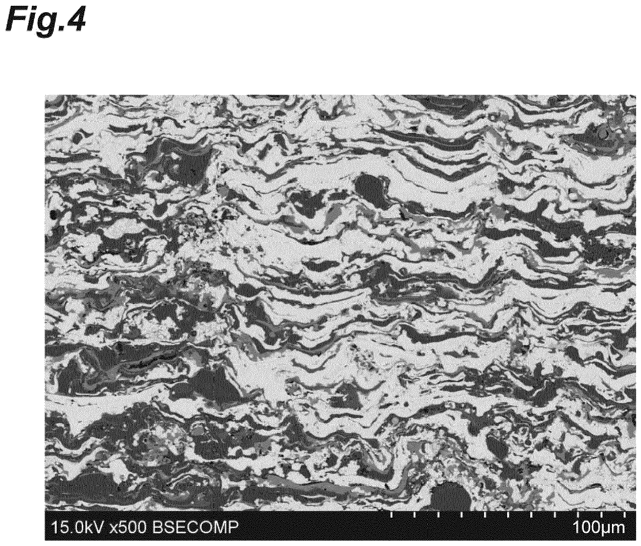

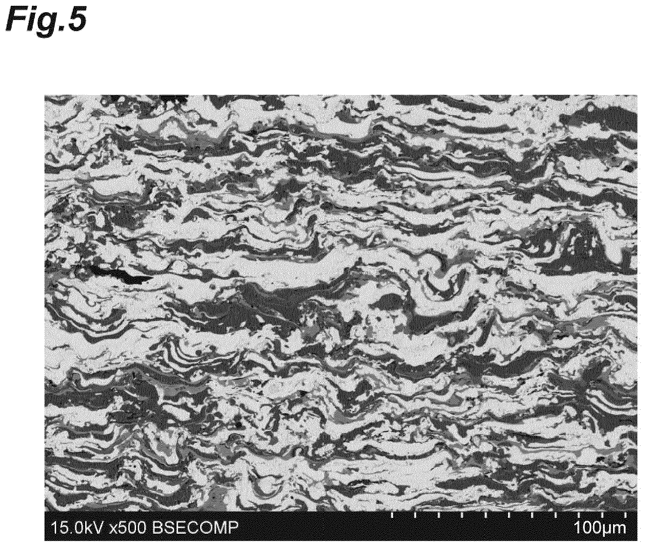

A reflection electron image of the cross-section 1 of the thermal spray coating of Example 1 was photographed by SEM. The reflection electron image of the cross-section 1 of the thermal spray coating is shown in Figure 4. The magnification of the reflection electron image of the cross-section 1 was 500 times, and the resolution (the number of pixels) was 1280 × 960 pixels. By the same method, a reflection electron image of another part (cross-section 2) other than the cross-section 1, of the thermal spray coating in the direction perpendicular to the sliding surface of the base material was photographed. The reflection electron image of the cross-section 2 is shown in Figure 5. White portions in Figures 4 and 5 were molybdenum phases; deep gray portions were chromium carbide phases; light gray portions were nickel chromium alloy phases; and black portions were pores. From Figures 4 and 5, it was confirmed that layered molybdenum phases, layered chromium carbide phases, layered nickel chromium alloy phases and pores were each folded, and the each phases and the pores were deposited on the sliding surface.

The thermal spray coating of the sliding member of Example 1 was cut in the direction perpendicular to the sliding surface of the base material. The respective contents of carbon, oxygen, molybdenum, chromium and nickel at measurement sites a, b, c, d and e pertaining to the cross-section of the thermal spray coating were measured by the SEM-EDX. The measurement results are shown in Table 3.

The following steps 1 to 5 using the reflection electron image of the cross-section 1 of the thermal spray coating were carried out.
<Step 1> Based on the contrast differences in the reflection electron image, molybdenum phases, chromium carbide phases, nickel chromium alloy phases and pores are distinguished from one another.
<Step 2> Noises were removed from the reflection electron image by Majority Filtering using a mask size of 3 × 3 pixels.
<Step 3> The thicknesses of the each phase present in one pixel row consisting of a plurality of pixels lining up longitudinally (in the direction perpendicular to the sliding surface) in the reflection electron image, and the widths of the pores present therein were each individually added up.
<Step 4> The numbers of the each phase and the number of the pores present in the above one pixel row were each individually counted.
<Step 5> The above steps 3 and 4 were carried out for all pixel rows lining up longitudinally (in the direction perpendicular to the sliding surface) in the reflection electron image.

By carrying out the steps 1 to 5 using the reflection electron image of the cross-section 1, the number N_{Mo} of the molybdenum phases, the number N_{CrC} of the chromium carbide phases, the number N_{NiCr} of the nickel chromium alloy phases, and the number N_{P} of the pores, and the thickness T_{Mo} of the molybdenum phases, the thickness T_{CrC} of the chromium carbide phases, the thickness T_{NiCr} of the nickel chromium alloy phases, and the width D of the pores were measured. These measurement results regarding the cross-section 1 are shown in the column of cross-section No. 1 of Table 2. N_{Mo} + N_{CrC} + N_{NiCr} + N_{P}, calculated based on these measurement results, are shown in Table 2. The average value T_{AVE} of the T_{Mo}, T_{CrC} and T_{NiCr}, and the T_{CrC}/T_{Mo} are shown in Table 2.

The steps 1 to 5 using the reflection electron image of the cross-section 2 were carried out by the same method as in the case of the reflection electron image of the cross-section 1. By carrying out the steps 1 to 5 using the reflection electron image of the cross-section 2, N_{Mo}, N_{CrC}, N_{NiCr}, N_{P}, T_{Mo}, T_{CrC}, T_{NiCr} and D were measured. These measurement results regarding the cross-section 2 are shown in the column of cross-section No. 2 of Table 2. N_{Mo} + N_{CrC} + N_{NiCr} + N_{P}, calculated based on these measurement results, are shown in Table 2. The average value T_{AVE} and the T_{CrC}/T_{Mo}, calculated based on the measurement results regarding the cross-section 2, are shown in Table 2.

### [Vickers hardness]

The Vickers hardness of the thermal spray coating of Example 1 was measured by the following method.

The Vickers hardness was measured according to a method prescribed in JIS Z 2244. For the measurement, a Vickers hardness tester (manufactured by Akashi Corp., trade name: MVK-G2) was used. In the measurement of the Vickers hardness, the test force was HV0.1, and the holding time of the load was 10 sec. Vickers hardnesses of 20 places positioned at the central part of the cross-section of the thermal spray coating in the direction perpendicular to the sliding surface of the base material of the sliding member were measured, and the average value thereof was determined. The average value of the Vickers hardnesses is shown in Table 1.

### [Average abrasion loss]

The abrasion resistance test of the sliding member of Example 1 was carried out by the following method.

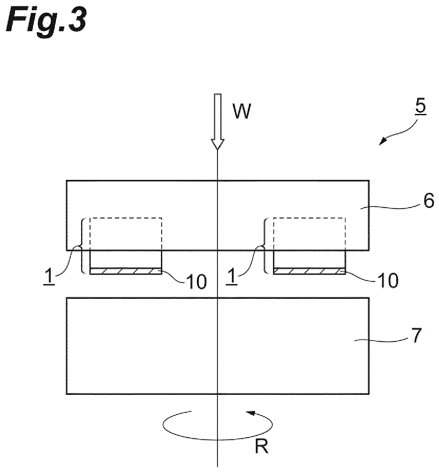

Figure 3 is a side view of a abrasion loss measuring apparatus used in the abrasion resistance test. The abrasion loss measuring apparatus 5 has a holder 6 of sliding members, and a disc 7 being an opposite member arranged facing the holder. Two sliding members 1 of Example 1 were inserted as abrasion pins to predetermined locations of the holder 6 and fixed. The thermal spray coatings 10 of the sliding members 1 installed on the holder 6 were faced with the disc 7. A load W was applied on the holder 6 to bring the thermal spray coatings 10 of the sliding members 1 into contact with the disc 7. In the state that the thermal spray coatings 10 and the disc 7 contact with each other, the disc 7 was rotated in the direction of the arrow R in Figure 3 under the following conditions while a lubricating oil was fed to the contact surfaces.

### <Test condition>

Size of the abrasion pins (sliding members): 5.0 mm long × 3.5 mm wide × 8.0 mm thick
Coatings as they were (thermal spray coatings having been subjected to no post-treatment such as polishing after the thermal spraying)(5.0 mm × 3.5 mm)
Opposite member: a disc having a φ of 60 mm, having an arithmetic average roughness Ra of 0.2 to 0.4 µm as regulated by cross hatch-finishing, being made of a boron cast iron ("Tarkalloy"(R))
Contact surface area of one piston ring with the disc: 3.5 mm × 5 mm
Contact surface pressure: 94 MPa
Lubricating oil: a product equivalent to JOMO Delstar F20
Feed of the lubricating oil: oil feeding (150 mL/min)
Temperature of the lubricating oil: 80°C (as a set temperature of an oil bath), about 65°C (at the time of feeding to the sliding surface)
Test method:
   1) a running-in at a load of 500 N at a rotational velocity of the opposite member of 500 rpm for 5 min
   2) a regular test at a load of 3300 N at a rotational velocity of the opposite member of 790 rpm for 60 min
   3) measurement of abrasion losses of the thermal spray coatings and the opposite member
   4) Carrying out the 1) to the 3) again

The thicknesses (total value of the thicknesses of the base material 2 and the thermal spray coating 10) of the entire of the sliding member 1 before and after the abrasion resistance test were measured by using a micrometer. By subtracting the thickness of the sliding member 1 after the abrasion resistance test from the thickness of the sliding member 1 before the abrasion resistance test, the abrasion loss of the thermal spray coating 10 was calculated. The abrasion resistance test was carried out three times for the each thermal spray coating, and the arithmetic average value of obtained abrasion losses of the thermal spray coating was taken as an average abrasion loss of the thermal spray coating 10. The average abrasion loss of the thermal spray coating of Example 1 is shown in Table 1.

Further, the distance (level difference) between the bottom surface of a slid portion (slid mark) on the disc surface and the surface of the non-slid portion thereof after the abrasion resistance test was measured. The distance (level difference) is a abrasion loss of the opposite member. The abrasion resistance test was carried out three times for the each thermal spray coating, and the arithmetic average value of the obtained abrasion losses of the opposite member was taken as an average abrasion loss. The average abrasion loss of the opposite member is shown in Table 1.

### (Examples 2 and 3 and Comparative Examples 1 to 4)

In fabrication of respective sliding members of Examples 2 and 3 and Comparative Examples 1 to 4, the average velocities and the average temperatures of thermal spray particles were regulated to values indicated in the following Table 1.

In Comparative Example 4, a powder composition B was used in place of the powder composition A. The powder composition B contained 60 parts by mass of molybdenum particles, 30 parts by mass of nickel chromium alloy particles, and 10 parts by mass of chromium carbide particles.

Respective sliding members of Examples 2 and 3 and Comparative Examples 1 to 4 were fabricated by the same method as in Example 1, except for the above conditions.

Structures and compositions of the respective sliding members of Examples 2 and 3 and Comparative Examples 1 to 4 were analyzed by the same method as in Example 1. The analysis results are shown in Tables 1 to 3.

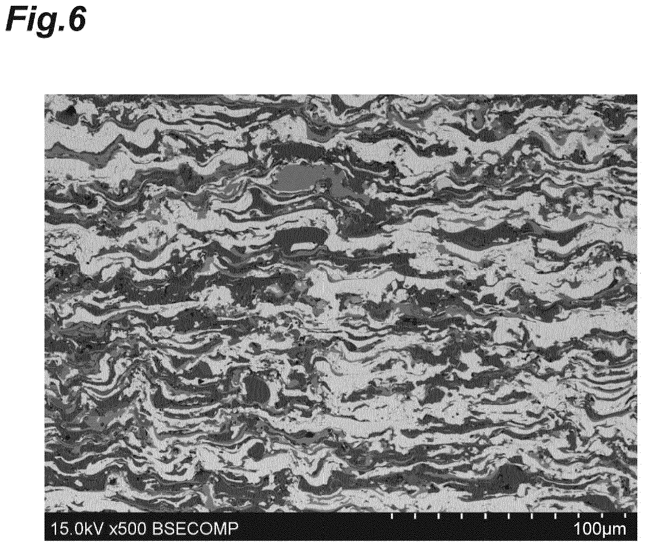

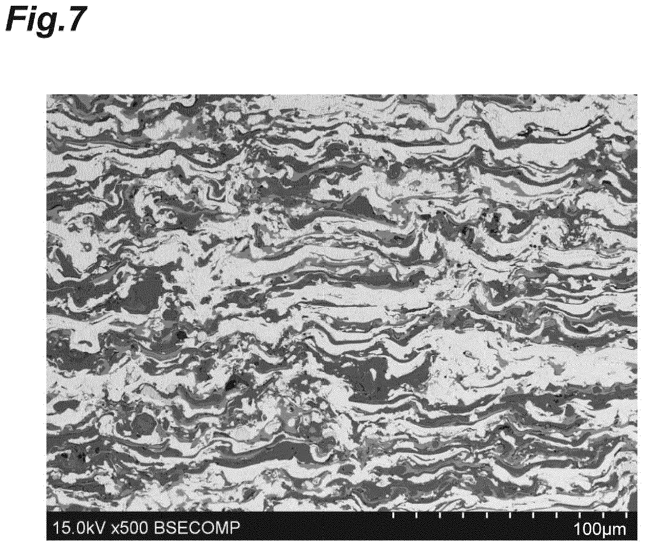

A reflection electron image, photographed by the same method as in Example 1, of a cross-section 1 of a thermal spray coating of Example 2 is shown in Figure 6. A reflection electron image, photographed by the same method as in Example 1, of a cross-section 2 of the thermal spray coating of Example 2 is shown in Figure 7.

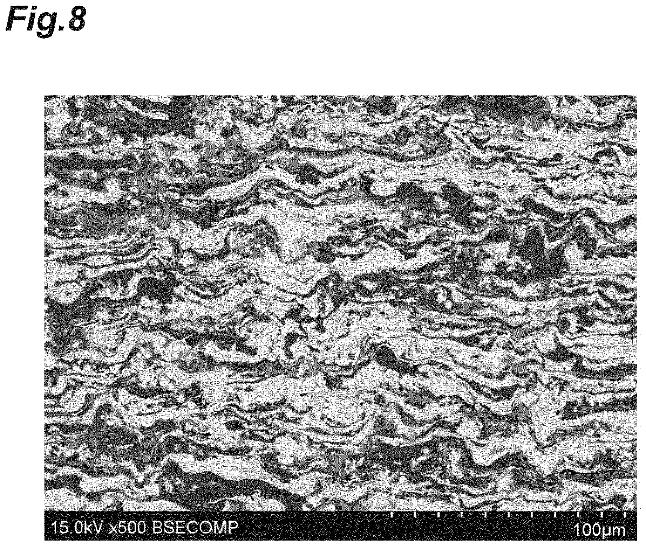

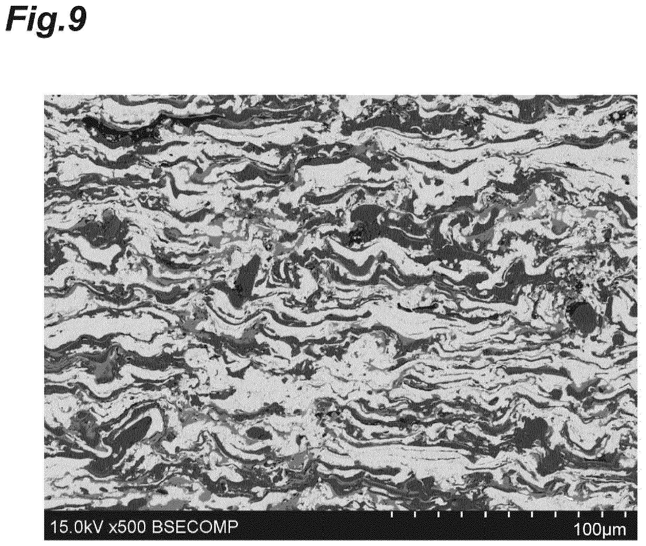

A reflection electron image, photographed by the same method as in Example 1, of a cross-section 1 of a thermal spray coating of Example 3 is shown in Figure 8. A reflection electron image, photographed by the same method as in Example 1, of a cross-section 2 of the thermal spray coating of Example 3 is shown in Figure 9.

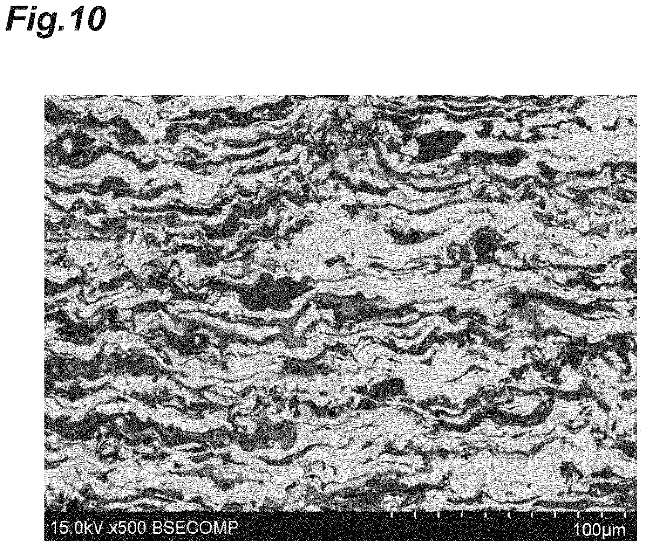

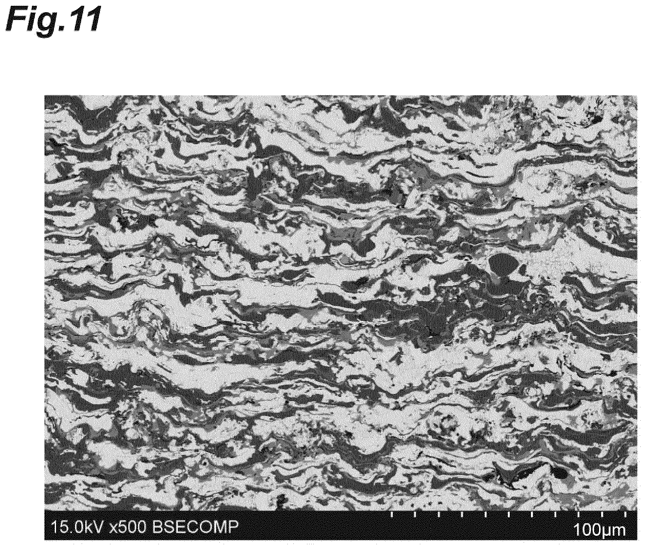

A reflection electron image, photographed by the same method as in Example 1, of a cross-section 1 of a thermal spray coating of Comparative Example 1 is shown in Figure 10. A reflection electron image, photographed by the same method as in Example 1, of a cross-section 2 of the thermal spray coating of Comparative Example 1 is shown in Figure 11.

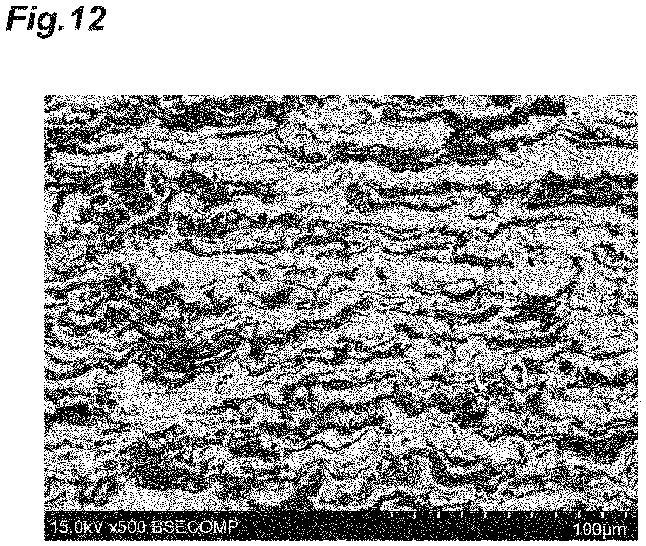

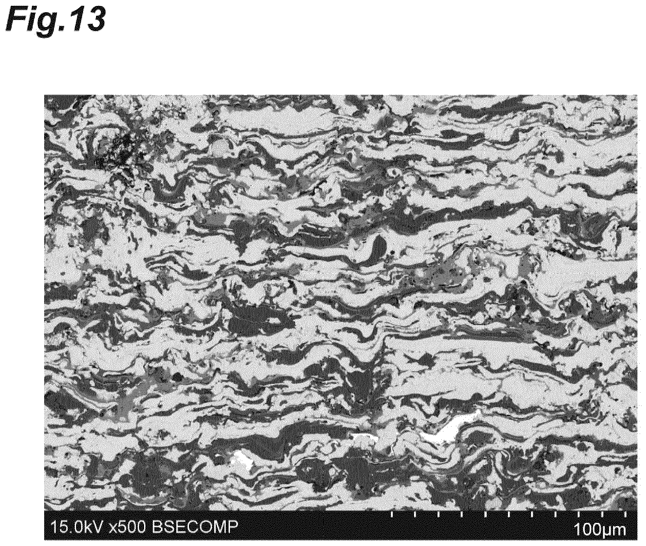

A reflection electron image, photographed by the same method as in Example 1, of a cross-section 1 of a thermal spray coating of Comparative Example 2 is shown in Figure 12. A reflection electron image, photographed by the same method as in Example 1, of a cross-section 2 of the thermal spray coating of Comparative Example 2 is shown in Figure 13.

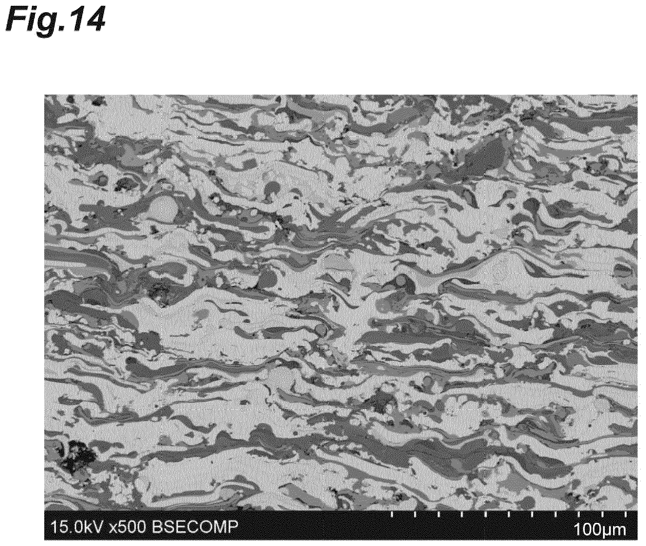

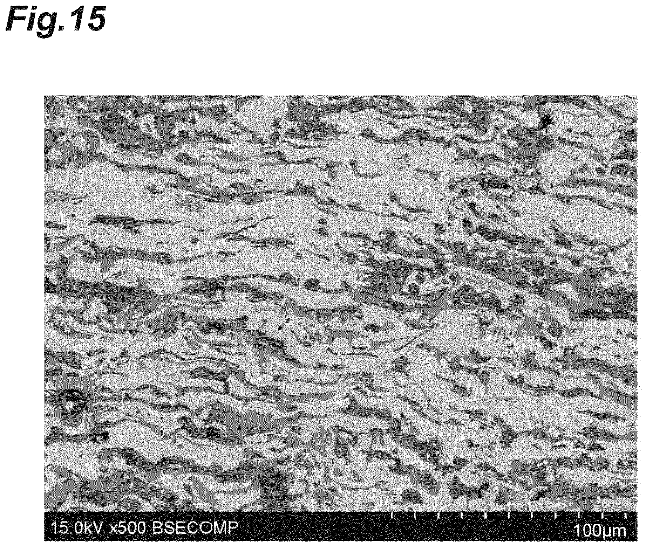

A reflection electron image, photographed by the same method as in Example 1, of a cross-section 1 of a thermal spray coating of Comparative Example 3 is shown in Figure 14. A reflection electron image, photographed by the same method as in Example 1, of a cross-section 2 of the thermal spray coating of Comparative Example 3 is shown in Figure 15.

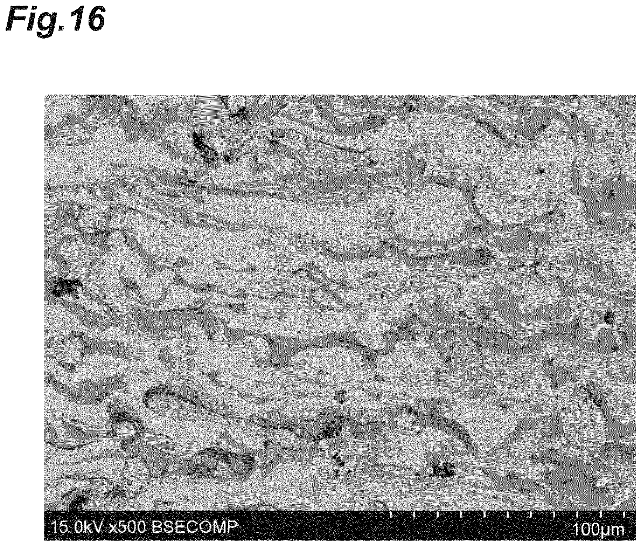

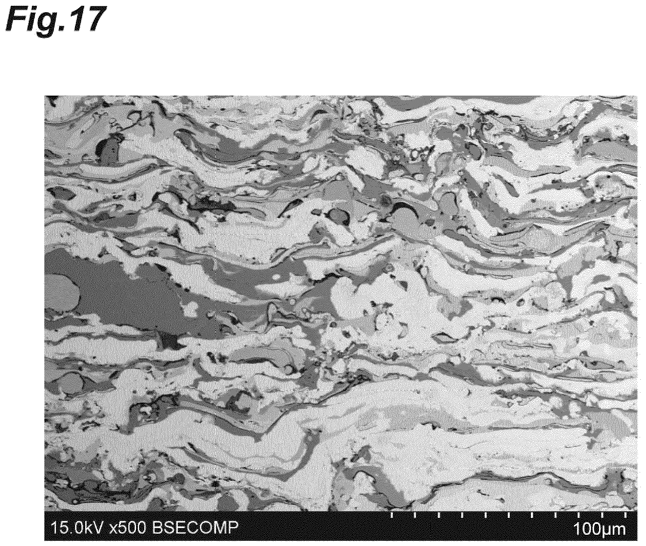

A reflection electron image, photographed by the same method as in Example 1, of a cross-section 1 of a thermal spray coating of Comparative Example 4 is shown in Figure 16. A reflection electron image, photographed by the same method as in Example 1, of a cross-section 2 of the thermal spray coating of Comparative Example 4 is shown in Figure 17.

As shown in Figures 6 to 17, it was confirmed that any of the respective sliding members of Examples 2 and 3 and Comparative Examples 1 to 4 had a base material and a thermal spray coating formed on a sliding surface of the base material; the thermal spray coating contained molybdenum phases, chromium carbide phases and nickel chromium alloy phases; and the molybdenum phases, the chromium carbide phases, the nickel chromium alloy phases, and pores were deposited on the sliding surface of the base material.

Vickers hardnesses of respective thermal spray coatings of the other Examples and Comparative Examples were measured by the same method as in Example 1. The measurement results are shown in Table 1.

The abrasion resistance test was carried out by using respective sliding members of the other Examples and Comparative Examples were carried out by the same method as in Example 1, and the average abrasion loss of the each thermal spray coating and the average abrasion loss of the opposite member were measured. The measurement results are shown in Table 1.

**[Table 1]**

| Table 1 | Powder Composition | Thermal Spray Particle | | Thickness of Thermal Spray Coating (µm) | Cross-section No. | T_{CrC}/T_{Mo} | Vickers Hardness (HV0.1) | Average Abrasion Loss | |
|---|---|---|---|---|---|---|---|---|---|
| | | Average Velocity (m/sec) | Average Temperature (°C) | | | | | Thermal Spray Coating (µm) | Opposite member (µm) |
| Example 1 | A | 218 | 3228 | 438 | 1 | 0.53 | 611 | 33.3 | 25.2 |
| | | | | | 2 | 0.54 | | | |
| Example 2 | A | 215 | 3025 | 372 | 1 | 0.76 | 618 | 24.5 | 21.1 |
| | | | | | 2 | 0.65 | | | |
| Example 3 | A | 226 | 3085 | 352 | 1 | 0.53 | 606 | 37 | 23.3 |
| | | | | | 2 | 0.51 | | | |
| Comparative Example 1 | A | 203 | 2915 | 444 | 1 | 0.44 | 621 | 42.7 | 40.1 |
| | | | | | 2 | 0.43 | | | |
| Comparative Example 2 | A | 219 | 2772 | 363 | 1 | 0.45 | 594 | 41.7 | 37.3 |
| | | | | | 2 | 0.43 | | | |
| Comparative Example 3 | A | 75 | 2808 | 370 | 1 | 0.44 | 532 | 113 | 44 |
| | | | | | 2 | 0.38 | | | |
| Comparative Example 4 | B | 75 | 2808 | 389 | 1 | 0.19 | 517 | 76.6 | 28.9 |
| | | | | | 2 | 0.21 | | | |

**[Table 2]**

| Table 2 | Cross-section No. | Number N_{P} of Pores | Number of Phases | | | N_{Mo}+N_{CrC}+ N_{NiCr}+N_{P} | Width D of Pores | Thickness of Phase | | | T_{AVE} | T_{CrC}/T_{Mo} |
|---|---|---|---|---|---|---|---|---|---|---|---|---|
| | | | N_{CrC} | N_{NiCr} | N_{Mo} | | | T_{CrC} | T_{NiCr} | T_{Mo} | | |
| Example 1 | 1 | 1.8 | 16.0 | 23.5 | 17.3 | 58.6 | 0.5 | 1.6 | 0.9 | 3.0 | 1.8 | 0.53 |
| | 2 | 2.5 | 17.0 | 23.7 | 17.9 | 61.1 | 0.6 | 1.6 | 0.9 | 2.9 | 1.8 | 0.54 |
| Example 2 | 1 | 3.2 | 21.2 | 22.4 | 17.8 | 64.6 | 0.6 | 1.8 | 0.8 | 2.4 | 1.7 | 0.76 |
| | 2 | 0.6 | 18.4 | 15.4 | 17.2 | 51.6 | 0.6 | 1.9 | 0.8 | 3.0 | 1.9 | 0.65 |
| Example 3 | 1 | 3.2 | 18.0 | 23.3 | 18.7 | 63.2 | 0.6 | 1.5 | 0.9 | 2.7 | 1.7 | 0.53 |
| | 2 | 3.6 | 17.4 | 24.4 | 18.4 | 63.8 | 0.6 | 1.4 | 0.9 | 2.8 | 1.7 | 0.51 |
| Comparative Example 1 | 1 | 6.5 | 16.2 | 20.1 | 16.7 | 59.5 | 0.6 | 1.5 | 0.8 | 3.4 | 1.9 | 0.44 |
| | 2 | 7.0 | 16.6 | 19.5 | 17.4 | 60.5 | 0.6 | 1.4 | 0.8 | 3.3 | 1.8 | 0.43 |
| Comparative Example 2 | 1 | 4.6 | 17.1 | 13.2 | 16.5 | 51.4 | 0.6 | 1.6 | 0.7 | 3.6 | 2.0 | 0.45 |
| | 2 | 3.5 | 16.0 | 23.2 | 16.9 | 59.6 | 0.6 | 1.4 | 0.9 | 3.2 | 1.8 | 0.43 |
| Comparative Example 3 | 1 | 1.0 | 15.6 | 15.1 | 13.8 | 45.5 | 0.8 | 1.8 | 1.0 | 4.1 | 2.3 | 0.44 |
| | 2 | 1.2 | 15.1 | 12.3 | 13.4 | 42.0 | 0.8 | 1.7 | 0.9 | 4.6 | 2.4 | 0.38 |
| Comparative Example 4 | 1 | 1.1 | 11.2 | 13.7 | 12.8 | 38.8 | 1.1 | 1.0 | 1.3 | 5.4 | 2.6 | 0.19 |
| | 2 | 2.4 | 10.5 | 13.3 | 12.6 | 38.8 | 0.7 | 1.2 | 1.2 | 5.6 | 2.6 | 0.21 |

**[Table 3]**

| Table 3 | Measurement Site | Content (% by mass) | | | | | |
|---|---|---|---|---|---|---|---|
| | | C | O | Mo | Cr | Ni | Total |
| Example 1 | a | 12.15 | 8.66 | 43.22 | 26.88 | 9.09 | 100.00 |
| | b | 11.86 | 8.25 | 48.68 | 21.90 | 9.31 | 100.00 |
| | c | 11.68 | 8.93 | 42.88 | 26.28 | 10.23 | 100.00 |
| | d | 12.37 | 8.56 | 45.31 | 23.58 | 10.18 | 100.00 |
| | e | 12.16 | 8.68 | 46.20 | 24.18 | 8.78 | 100.00 |
| Example 2 | a | 12.51 | 9.06 | 43.46 | 26.99 | 7.98 | 100.00 |
| | b | 11.75 | 8.42 | 42.78 | 25.16 | 11.89 | 100.00 |
| | c | 13.32 | 8.59 | 45.27 | 22.63 | 10.19 | 100.00 |
| | d | 12.21 | 8.67 | 45.98 | 24.06 | 9.08 | 100.00 |
| | e | 12.15 | 8.52 | 45.61 | 24.70 | 9.02 | 100.00 |
| Example 3 | a | 12.14 | 8.62 | 42.88 | 26.33 | 10.03 | 100.00 |
| | b | 12.43 | 8.95 | 40.64 | 29.16 | 8.82 | 100.00 |
| | c | 11.89 | 9.07 | 41.09 | 27.86 | 10.09 | 100.00 |
| | d | 12.63 | 8.25 | 45.49 | 25.61 | 8.02 | 100.00 |
| | e | 11.75 | 8.98 | 43.20 | 26.33 | 9.74 | 100.00 |
| Comparative Example 1 | a | 11.88 | 9.31 | 46.71 | 23.82 | 8.28 | 100.00 |
| | b | 12.23 | 9.65 | 42.31 | 27.02 | 8.79 | 100.00 |
| | c | 12.29 | 9.48 | 43.83 | 25.97 | 8.43 | 100.00 |
| | d | 12.17 | 9.45 | 43.39 | 26.35 | 8.64 | 100,00 |
| | e | 11.60 | 9.00 | 46.87 | 25.01 | 7.52 | 100.00 |
| Comparative Example 2 | a | 12.23 | 8.98 | 45.51 | 25.55 | 7.73 | 100.00 |
| | b | 11.65 | 9.41 | 45.47 | 25.03 | 8.44 | 100.00 |
| | c | 12.18 | 9.39 | 46.40 | 24.65 | 7.38 | 100.00 |
| | d | 11.79 | 8.69 | 47.38 | 23.56 | 8.58 | 100.00 |
| | e | 11.37 | 9.43 | 45.05 | 25.07 | 9.08 | 100.00 |
| Comparative Example 3 | a | 6.49 | 9.74 | 48.80 | 23.13 | 11.84 | 100.00 |
| | b | 7.22 | 10.12 | 49.54 | 22.13 | 10.99 | 100.00 |
| | c | 7.24 | 10.24 | 51.64 | 22.05 | 8.83 | 100.00 |
| Comparative Example 4 | a | 1.34 | 0.00 | 59.00 | 14.86 | 24.80 | 100.00 |
| | b | 0.49 | 3.24 | 50.55 | 15.02 | 30.70 | 100.00 |
| | c | 0.44 | 3.40 | 47.12 | 14.87 | 34.17 | 100.00 |
| | d | 0.45 | 3.64 | 55.14 | 14.13 | 26.64 | 100.00 |
| | e | 0.43 | 3.24 | 50.42 | 14.87 | 31.04 | 100.00 |
| | f | 0.66 | 3.51 | 54.08 | 13.52 | 28.23 | 100.00 |

It was confirmed that in Examples 1 to 3 in which the T_{CrC}/T_{Mo} was 0.46 to 1.00, as compared with Comparative Examples 1 to 4, the abrasion loss of the thermal spray coating after the abrasion resistance test was smaller, and the abrasion loss of the opposite member was smaller.

Although any of the thermal spray coatings of Examples 1 to 3 and Comparative Examples 1 to 3 was formed from the powder composition A, in Comparative Example 3, a texture as fine as those of the thermal spray coatings of Examples 1 to 3 and Comparative Examples 1 and 2 could not be obtained (see Figures 4 to 15). As shown in Table 2, the thermal spray coating of Comparative Example 3, as compared with Examples 1 to 3 and Comparative Examples 1 and 2, had a larger average thickness of each phases and a fewer average number of the each phases. It is conceivable that the difference of Comparative Example 3 from Examples 1 to 3 and Comparative Examples 1 and 2 was due to that the average velocity of the thermal spray particles was low in Comparative Example 3. In Comparative Example 3, as compared with Examples 1 to 3 and Comparative Examples 1 and 2, the average abrasion losses of the thermal spray coating and the opposite member were larger. It is conceivable that this was due to that since the texture of the thermal spray coating of Comparative Example 3 was not fine, the abrasive abrasion was generated.

### Industrial Applicability

The sliding member according to the present invention is applied to, for example, piston rings for engines of automobiles, ships and the like.

### Reference Signs List

1 ··· sliding member (piston ring), 2 ··· base material, 2a ··· sliding surface, 5 ··· abrasion loss measuring apparatus, 6 ··· holder, 7 ··· disc, 10 ··· thermal spray coating, 11 ··· molybdenum phase, 12 ··· chromium carbide phase, 13 ··· nickel chromium alloy phase, and 14 ··· pore.

## Claims

1. A sliding member, comprising: a base material; and a thermal spray coating formed on a sliding surface of the base material,
wherein the thermal spray coating includes a molybdenum phase, a chromium carbide phase and a nickel chromium alloy phase;
the molybdenum phase, the chromium carbide phase and the nickel chromium alloy phase are deposited on the sliding surface of the base material;
T_{CrC}/T_{Mo} is 0.46 to 1.00 where an average value of thicknesses of the chromium carbide phases in a direction perpendicular to the sliding surface of the base material is T_{CrR}, and an average value of thicknesses of the molybdenum phases in the direction perpendicular to the sliding surface of the base material is T_{Mo}; and
wherein the T_{Mo} is 1.4 to 4.2 µm; and the T_{CrC} is 1.1 to 2.2 µm.

2. The sliding member according to claim 1, wherein pores are formed in the thermal spray coating;
the molybdenum phases, the chromium carbide phases, the nickel chromium alloy phases and the pores overlap on the sliding surface; and
a total of numbers of the molybdenum phases, the chromium carbide phases, the nickel chromium alloy phases and the pores overlapping on the sliding surface is 48/(100 µm) to 71/(100 µm) per unit thickness of the thermal spray coating in the direction perpendicular to the sliding surface.

3. The sliding member according to any one of claim 1 or 2, wherein:
a content of a molybdenum atom in the thermal spray coating is 37 to 51% by mass;
a content of a chromium atom in the thermal spray coating is 19 to 32% by mass;
a content of a nickel atom in the thermal spray coating is 6 to 13% by mass; and
a content of a carbon atom in the thermal spray coating is 10 to 14% by mass.

4. The sliding member according to any one of claims 1 to 3, wherein an average hardness of the thermal spray coating is 400 to 900 HV0.1.

5. A piston ring comprising the sliding member according to any one of claims 1 to 4.

## Patentansprüche

1. Gleitelement, das aufweist: ein Grundmaterial; und eine thermische Sprühbeschichtung, die auf einer Gleitoberfläche des Grundmaterials ausgebildet ist,
wobei die thermische Sprühbeschichtung eine Molybdänphase, eine Chromkarbidphase und eine Chrom-Nickel-Legierungsphase umfasst;
wobei die Molybdänphase, eine Chromkarbidphase und die Chrom-Nickel-Legierungsphase auf der Gleitoberfläche des Grundmaterials abgeschieden sind;
wobei T_{CrC}/Tₘₒ 0,46 zu 1,00 beträgt, wobei ein Durchschnittswert von Dicken der Chromkarbidphasen in einer Richtung senkrecht zu der Gleitoberfläche des Grundmaterials T_{CrC} ist, und ein Durchschnittswert von Dicken der Molybdänphasen in der Richtung senkrecht zu der Gleitoberfläche des Grundmaterials T_{Mo} ist; und
wobei T_{Mo} 1,4 bis 4,2 µm ist und T_{CrC} 1,1 bis 2,2 µm ist.

2. Gleitelement nach Anspruch 1, wobei in der thermischen Sprühbeschichtung Poren ausgebildet werden;
wobei die Molybdänphasen, die Chromkarbidphasen, die Chrom-Nickel-Legierungsphasen und die Poren auf der Gleitoberfläche überlappen; und
wobei die Gesamtzahlen der Molybdänphasen, der Chromkarbidphasen, der Chrom-Nickel-Legierungsphasen und der Poren, welche auf der Gleitoberfläche überlappen, 48/(100 µm) bis 71/(100 µm) pro Einheitsdicke der thermischen Sprühbeschichtung in der Richtung senkrecht zu der Gleitoberfläche betragen.

3. Gleitelement nach einem der Ansprüche 1 oder 2, wobei:
ein Gehalt von Molybdänatomen in der thermischen Sprühbeschichtung 37 bis 51 Masse-% beträgt;
ein Gehalt von Chromatomen in der thermischen Sprühbeschichtung 19 bis 32 Masse-% beträgt;
ein Gehalt von Nickelatomen in der thermischen Sprühbeschichtung 6 bis 13 Masse-% beträgt;
ein Gehalt von Kohlenstoffatomen in der thermischen Sprühbeschichtung 10 bis 14 Masse-% beträgt.

4. Gleitelement nach einem der Ansprüche 1 bis 3, wobei eine durchschnittliche Härte der thermischen Sprühbeschichtung 400 bis 900 HV0.1 beträgt.

5. Kolbenring, der ein Gleitelement nach einem der Ansprüche 1 bis 4 aufweist.

## Revendications

1. Élément coulissant, comprenant : un matériau de base ; et un revêtement de pulvérisation thermique formé sur une surface de glissement du matériau de base,
dans lequel le revêtement de pulvérisation thermique comprend une phase de molybdène, une phase de carbure de chrome et une phase d'alliage de nickel et de chrome ;
la phase de molybdène, la phase de carbure de chrome et la phase d'alliage de nickel et de chrome sont déposées sur la surface de glissement du matériau de base ;
T_{CrC}/T_{Mo} va de 0,46 à 1,00 où une valeur moyenne des épaisseurs des phases de carbure de chrome dans une direction perpendiculaire à la surface de glissement du matériau de base est T_{CrC}, et une valeur moyenne des épaisseurs des phases de molybdène dans la direction perpendiculaire à la surface de glissement du matériau de base est T_{Mo} ; et
dans lequel le T_{Mo} va de 1,4 à 4,2 µm ; et le T_{CrC} va de 1,1 à 2,2 µm.

2. Élément coulissant selon la revendication 1, dans lequel des pores sont formés dans le revêtement de pulvérisation thermique ;
les phases de molybdène, les phases de carbure de chrome, les phases d'alliage de nickel et de chrome et les pores se chevauchent sur la surface de glissement ; et
un total des nombres des phases de molybdène, des phases de carbure de chrome, des phases d'alliage de nickel et de chrome et des pores se chevauchant sur la surface de glissement est de 48/(100 µm) à 71/(100 µm) par unité d'épaisseur du revêtement de pulvérisation thermique dans la direction perpendiculaire à la surface de glissement.

3. Élément coulissant selon l'une quelconque des revendications 1 ou 2, dans lequel :
une teneur en atome de molybdène dans le revêtement de pulvérisation thermique est de 37 à 51 % en masse ;
une teneur en atome de chrome dans le revêtement de pulvérisation thermique est de 19 à 32 % en masse ;
une teneur en atome de nickel dans le revêtement de pulvérisation thermique est de 6 à 13 % en masse ; et
une teneur en atome de carbone dans le revêtement de pulvérisation thermique est de 10 à 14 % en masse.

4. Élément coulissant selon l'une quelconque des revendications 1 à 3, dans lequel une dureté moyenne du revêtement de pulvérisation thermique est de 400 à 900 HV0.1.

5. Segment de piston comprenant l'élément coulissant selon l'une quelconque des revendications 1 à 4.
